# EUROPEAN PATENT SPECIFICATION

(11) **EP 0 523 090 B1**
(45) Date of publication and mention of the grant of the patent: **13.12.1995**
(21) Application number: 91906669.6
(22) Date of filing: 05.04.1991
(51) Int. Cl.: F16L 55/162

(54) **Flexible tubular element for the repair of conduits and use of this element**
Flexibles rohrförmiges Element zur Reparatur von Rohren und Anwendung dieses Elementes
Elément flexible tubulaire pour la réparation de conduits et utilisation de cet élément

(30) Priority: 06.04.1990 FI 901744
(43) Date of publication of application: 20.01.1993
(73) Proprietor: SUOMEN PUTKISANEERAUS OY, 20380 Turku (FI)
(72) Inventor: KARTTUNEN, Mikko, SF-33560 Tampere (FI); SUOKAS, Esa, SF-33580 Tampere (FI); MÄKELÄ, Seppo, SF-23100 Mynämäki (FI); JÄRVINEN, Seppo, SF-20380 Turku (FI)
(74) Representative: Feldmann, Clarence Paul
(86) International application number: FI9100102
(87) International publication number: WO9115707

(56) References cited:
- EP-A- 0 234 142
- EP-A- 0 278 466
- EP-A- 0 301 204
- EP-A- 0 344 896
- DE-A- 1 585 079
- GB-A- 2 085 112
- US-A- 3 424 220
- US-A- 4 576 205

## Description

The present invention relates to a flow conduit repair material set forth in the preamble of claim 1 for repairing flow conduits, such as pipe lines.

The repair work of old, deteriorated pipe lines with a purpose of fixing cracks and fissures developed in the pipes is currently generally effected by using a flexible material to be laid on the inner surface of pipes, said material including a curing agent as well as a necessary reinforcement layer for providing strength. Such material is generally laid in underground pipe lines form above the ground as a long tubular sleeve in a manner that the pipes need not be dug up. Such a method is known e.g. as "Insituform" or "Paltem" (Trade Marks) and it is in a wide-spread use.

The material inserted inside a pipe line is required to have a particularly good flexibility, plasticity and strength and, thus, it has been difficult to find proper materials. In addition, since pipes come in varying sizes and often include sharp bends, flexibility and plasticity are particularly important factors in a lining and repair material.

EP-A-0′301′204 shows a repair material for conduits, which consists of a foil and a knitted fabric attached thereto. The knitted fabric is supposed as a reinforcement layer of the foil, which will be hardened after insertion in the conduit. During insertion, the fabric is flexible.

DE-A-1'585'079 describes a knit fabric for use of reinforcement layer for tubes. The fabric is penetrated by filaments which extend inside the fabric in a single direction.

An object of the invention is to provide a repair material which is capable of achieving further improved results in pipe-line repair work. This is solved by a repair material with the features set forth in claim 1. By virtue of a reinforcement layer provided by a knitted fabric, the repair material has a good flexibility, plasticity and strength.

A knitted fabric is capable of providing the above properties, which are desirable in association with pipe-line repair materials. Furthermore, the annexed subclaims disclose a few preferred embodiments for a element of the invention. The element includes a felt layer, preferably consisting of fibres and having a knitted fabric fastened thereto. Thus, the felt can be used e.g. for absorbing a curing agent into the material. A high strength, both horizontally and in depth of the material, is obtained by binding felt layer and material together by needling. The knitting can be of any prior known type, e.g. a smooth knit, a lining knit or an interlock knit. According to one preferred embodiment, such a knitted fabric includes continuous filaments separate from the yarn forming the knit loops, the knitted fabric is in this case manufactured by laying-in technique.

The invention is also related to the use disclosed in claim 5.

The invention will now be described in more detail with reference made to the accompanying drawing, in which
fig. 1 shows the principle of a method of lining a pipe
fig. 2 shows a composite material in a sectional view perpendicular to its plane,
fig. 3 shows a composite material according to a second alternative,
fig. 4 shows a composite material according to a third alternative, and
fig. 5 shows one preferred type of knitted fabric which is manufactured by laying-in technique and which can be used in a lining material of the invention.

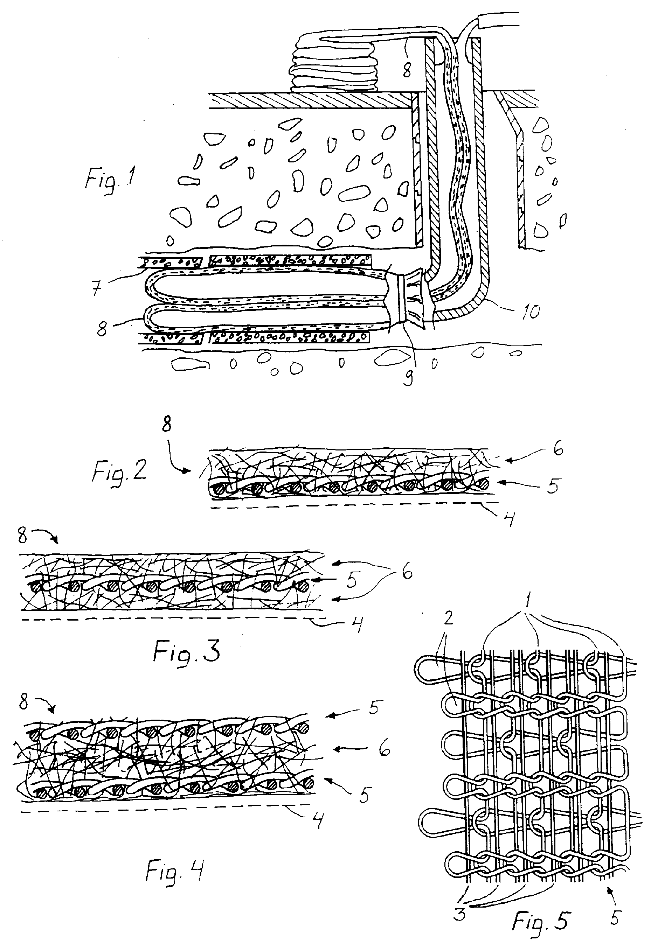

Fig. 1 illustrates the main principle of a method of lining a pipe. Into an underground flow conduit 7, such as e.g. a water supply line, a sewage pipe or a gas line, is inserted a tubular continuous sleeve 8 in a manner that its one open end is clamped by means of a collar or a like 9 around the mouth of a special guide tube 10. The sleeve advances through the guide tube in a manner that its outer surface to be laid against the actual pipe to be lined serves as an inner surface inside the guide tube, i.e. in a way the sleeve is turned inside out. This is followed by using a medium, such as a gas or a fluid, to advance said sleeve 8 into the interor of a pipe 7 to be repaired and, as a result of its plasticity or compliance, the tubular sleeve presses its outer surface against the inner walls of pipe 7. Towards the final stage, the sleeve will lie over its entire length inside a pipe section of the corresponding length as a tubular member to surround the inner periphery of a pipe line in the cross-sectional direction of said pipe, whereafter said sleeve 8 is cured or hardened by applying heat thereto, e.g. by passing hot water or gas inside the sleeve. The curing into a pipe-sealing inner layer occurs by virtue of a heat-setting resin, such as e.g. epoxy resin or unsaturated polyester, contained in the sleeve.

Fig. 2 illustrates the structure of a composite material. The composite material 8 comprises a felt 6 which is a non-woven felt consisting of fibres. The felt layer 6 and a knitted fabric 5 are fastened together preferably by needling, i.e. said felt layer 6 and knitted fabric 5 are fixed together mechanically during the course of needling by means of the felt layer fibres, which are attached to the fibres of knitted fabric 5. A felt layer can also be produced in a manner that the fibres are fed as a carded mat on top of the knitted fabric, followed by needling.

Fig. 3 illustrates another structure, wherein a felt layer 5 lies between two knitted fabrics 5. This structure can be manufactured as described above.

Fig. 4 illustrates yet a third structure with a knitted fabric 5 inside a felt layer. This can be provided e.g. by needling two felt layers on the opposite sides of a knitted fabric 5.

Figs. 2-4 illustrate a single knitted fabric 5 as a reinforcement layer. Other types of knitted fabric can also be used, as will be explained later.

The use of a knitted fabric as a reinforcement for material 8 offers a major benefit because of the excellent compliancy of a knitted fabric and, thus, the composite material complies well in sharp bends and curves when used as described above. In addition, a knitted fabric has good strength characteristics.

The lining element of the invention further includes a thin surface layer 4 which is laid on the face of a composite material and is shown with dash-dot-lines in figs. 2-4. The relative position of felt layer 6 and knitted fabric 5 should be such that the felt layer forms the outer surface of a composite material for applying said surface or coating layer 4 thereon e.g. by injection. Thus, the coating layer material cannot penetrate into the knitted fabric in a fashion interfering with its function. In the case of fig. 2, for example, the needling depth can be adjusted to be such that the felt layer fibres form the outer material surface also on its face towards a knitted fabric 5. Layer 4 can be a prior known material used in similar materials, such as polyurethane, which is facing towards the interior of a flow conduit to insulate the other layers therefrom.

A heat-setting resin, such as epoxy resin or unsaturated polyester resin, can be absorbed in the material, e.g. just prior to its application, by impregnating felt layer 6 and knitted fabric 5 with such agent.

The material of felt layer 6 comprises preferably thermoplastic fibres, most preferably discontinuous fibres. In terms of their properties, the polyester fibres are particularly suitable for a felt material. It is also possible to employ mineral fibres, such as glass fibres.

Fig. 5 illustrates a knitted fabric for use in tubular element of the invention as a reinforcement. The knitted fabric is of a type manufactured by the application of so-called laying-in technique, i.e. it includes reinforcement filaments 3 which are separate from a fabric-forming yarn 1 and extend substantially in a single direction inside the knitted fabric. The reinforcement filaments 3 extend in a direction perpendicular to the direction of the fabric loop slots and will extend in peripheral direction in the finished tubular lining material in order to obtain radial strength. Filaments 3 can be mono- or multi-filaments, e.g. of polyester or glass fibre.

The knitted fabric shown in fig. 5 is of an interlock or double-knitting type, wherein the reinforcement filaments extend in a mutually parallel relationship through oppositely placed loops 2 perpendicularly to the direction of loop slots. An interlock type of knitted fabric is indeed a preferred type of knitting for the invention. The knitting yarn comprises unthreaded multifilament, preferably polyester or or glass. This type of knitting provides a particularly good compliancy.

A material of the invention can be manufactured with normal knitting and felt-forming machines and the joining of knitted fabric 5 and felt layer 6 can be effected by the application of normal needling technique. A tubular sleeve formed by the repair material can be manufactured e.g. by seaming together the side edges of a flat, continuous blank which comprises felt 6 and knitting 5. The sleeve can also be manufactured by first forming a knitted fabric with a circular knitting machine, whereafter a sleeve formed by the knitted fabric and a felt layer or layers are driven together in a manner that the sleeve is in flat condition at the time of joining, whereafter the resulting flat material is seamed together by its side edges to form a finished sleeve. Thus, such a product comprises a layer consisting of two superimposed knittings.

Patching of leakages in pipe lines can be done by using shorter tubular elements which are inserted inside a pipe to be repaired and, thus, it is possible to utilize the strength, elongation and compliancy of a composite material. Due to its special characteristics, however, the tubular element is particularly well suitable for use as long tubular repair material as said special characteristics thereof will be put to best possible use in this context.

## Claims

1. A flow conduit repair flexible tubular element, such as a pipe line repair element, comprising a coating layer (4), forming an outer surface, and a composite flexible material which includes a reinforcement layer, which comprises a knitted fabric (5)
characterized in that
said knitted fabric (5) comprises reinforcement filaments (3) which are separate from a fabric forming yarn (1) and extend inside the knitted fabric substantially in a single direction in the peripheral direction of a pipe,
that said knitted fabric (5) is combined with a felt layer (6), which consists of fibres, and
that at least the surface of the flexible material towards the coating layer (4) is formed by a part of said fibres.

2. A flexible element as set forth in claim 1, characterized in that the reinforcement layer consists of a plurality of knitted fabrics, each fastened to the felt layer (6).

3. A flexible element as set forth in claim 1, characterized in that a curing agent is absorbed in the felt layer (6).

4. A flexible element as set forth in either claim 1 or 3, characterized in that said one or a plurality of knitted fabrics (5) serving as reinforcement layer and said felt layer (6) are bound together by needling.

5. Use of a flexible element as set forth in either claim 1 to 3, characterized in that the curing agent is added to the felt layer (6) prior to insert the material into the conduit.

## Patentansprüche

1. Biegsames, rohrförmiges Element zum Reparieren von Rohrleitungen mit einer Überzugsschicht (4), welches die Aussenseite bildet und einem biegsamen Kompositmaterial mit einer Strickware (5) enthaltenden Verstärkungsschicht, dadurch gekennzeichnet, dass die Strickware (5) Verstärkungsfäden (3) enthält, die im Gestrick, aber getrennt vom Gestrick bildenden Garn in einer Richtung peripher zum Rohr verlaufen, dass diese Strickware (5) mit einer Filzschicht (6) zusammengefügt ist, welche Fasern enthält und dass mindestens die Oberfläche des flexiblen Materials, welches mit der Überzugsschicht (4) versehen, mindestens einen Teil dieser Fasern enthält.

2. Biegsames Element nach Anspruch 1, dadurch gekennzeichnet, dass die Verstärkungsschicht mehrere Strickwarenlagen enthält, die je mit der Filzschicht (6) verbunden sind.

3. Biegsames Element nach Anspruch 1, dadurch gekennzeichnet, dass die Filzschicht (6) mit einem Aushärtemittel getränkt ist.

4. Biegsames Element nach Anspruch 1 oder 3, dadurch gekennzeichnet, dass die eine oder mehrere als Verstärkungsschicht dienende Strickwaren (5) und die Filzschicht (6) durch Stiche miteinander verbunden sind.

5. Verwendung des biegsamen Elementes nach einem der Ansprüche 1 bis 3, dadurch gekennzeichnet, dass das Aushärtemittel erst kurz vor dem Einführen in das Rohr der Filzschicht (6) beigefügt wird.

## Revendications

1. Elément tubulaire flexible pour la réparation de conduits d'écoulement, tel qu'un élément de réparation de pipeline, comprenant une couche de revêtement (4), formant une surface externe, et une matière flexible composite incluant une couche de renforcement, qui comprend un tissu à mailles (5)
caractérisé en ce que
ledit tissu à mailles (5) comprend des filaments de renforcement (3) qui sont séparés du fil formant le tissu (1) et s'étendent dans le tissu à mailles pratiquement dans une seule direction dans la direction périphérique d'une canalisation,
que ledit tissu à mailles (5) est combiné avec une couche de feutre (6), qui consiste en des fibres, et
qu'au moins la surface de la matière flexible tournée vers la couche de revêtement (4) est formée par une partie des dites fibres.

2. Elément flexible selon la revendication 1, caractérisé en ce que la couche de renforcement consiste en une pluralité de tissus à mailles, chacun fixé à la couche de feutre (6).

3. Elément flexible selon la revendication 1, caractérisé en ce qu'un agent durcissant est absorbé dans la couche de feutre (6).

4. Elément flexible selon l'une quelconque des revendications 1 à 3, caractérisé en ce que l'un ou une pluralité des tissus à mailles (5) servant de couche de renforcement et la dite couche de feutre (6) sont liés entre eux par aiguilletage.

5. Utilisation d'un élément flexible selon l'une quelconque des revendications 1 à 3, caractérisée en ce que l'agent durcissant est ajouté à la couche de feutre (6) avant l'insertion de la matière dans le conduit.
